# EUROPEAN PATENT SPECIFICATION

(11) **EP 1 753 178 B1**
(45) Date of publication and mention of the grant of the patent: **28.05.2008**
(21) Application number: 05291697.0
(22) Date of filing: 08.08.2005
(51) Int. Cl.: H04L 12/56, H04Q 7/38

(54) **Method and system for supporting mobility of mobile terminal**
Verfahren und Vorrichtung zur Unterstützung der Mobilität eines mobiles Endgerätes
Procédé et appareil d'assistance de la mobilité d'un terminal mobile

(43) Date of publication of application: 14.02.2007
(73) Proprietor: Alcatel Lucent, 75008 Paris (FR)
(72) Inventor: Wahl, Stefan, 71701 Schwieberdingen (DE); Domschitz, Peter, 70191 Stuttgart (DE); Wünstel, Klaus, 71701 Schwieberdingen (DE); Banniza, Thomas-Rolf, 71701 Schwieberdingen (DE)
(74) Representative: Schmidt, Werner Karl

(56) References cited:
- EP-A- 1 551 144

## Description

### Background of the invention

The invention relates to a method for supporting mobility of at least one mobile telecommunications terminal in operative connection with a telecommunications network having a plurality of telecommunications resources accessible via a plurality of access networks and associated access technologies in operative connection with the telecommunications network, wherein the mobile telecommunications terminal is provided with information about access networks and access technologies available at least at its present geographic location for choosing an access to the telecommunications network via one of the respective access networks and associated access technologies in accordance with specifications of at least one telecommunications resource requested by the mobile telecommunications terminal, and wherein the information are provided independently of the access networks by means of a mobility service broker system in operative connection with a plurality of access networks.

Furthermore, the present invention relates to a telecommunications system, comprising:
- a telecommunications network having a plurality of telecommunications resources accessible via a plurality of access networks and associated access technologies in operative connection with the telecommunications network, wherein the telecommunications resources have diverse specifications with respect to at least one of input specifications, function carried out, output specifications, information for accounting purposes, subscription terms and resource utilisation limitations, in particular bandwidth and quality of service requirements,
- at least one mobile telecommunications terminal accessing the telecommunications network via one of the plurality of access networks and associated access technologies for requesting a service provided by at least one of the telecommunication resources, and
- a mobility service broker system in operative connection with a plurality of access networks, comprising a database including information about the specifications of the telecommunication resources and a matching unit for matching telecommunication resources to meet a service request by the mobile telecommunications terminal.

Additionally, the invention relates to a mobility service broker system for use in a telecommunications system of the above-mentioned type.

In the following, the term "telecommunications resources" refers to a variety of network data and media services. A non-exhaustive enumeration would include internet telephony, messaging, conferencing, voice mail, search services, portable digital device operation and media playback, entertainment, games, etc. In order to be able to use services of this kind, a (mobile) user must access the telecommunications network comprising said resources via access networks which are operated by respective access network providers/operators on a commercial basis and which are associated with certain available access technologies (see below), e.g. in the form of interfaces or data protocols. The quality of service depends on parameters such as maximal packet delay, packet jitter, bandwidth etc.

In state-of-the-art telecommunications systems mobile telecommunications terminals (in the following also simply referred to as "terminals") access a telecommunications network via radio access networks with mobility support and by means of suitable access technologies (providing access to e.g. WiFi, WIMAX, GMS, UMTS; incl. combined heterogeneous technologies, as e.g. Bluetooth at DSL) available in association with a given access network and/or a given access network operator (multiple fixed/mobile/private). Furthermore, the terminals can switch over to other basestations/access points, which allow alternative access to said given access network. This happens if the required connection quality parameters for an active connection to a given access network by means of a particular access technology cannot be satisfied by the old basestation/access point (provided that a better suited basestation/access point is available), e.g. when a bandwidth required for a given telecommunications resource, such as receiving a video data stream, is not available by means of the old basestation/accsess point. Usually, such a handover decision is performed by the access network based on an evaluation of the access situation at the location of the terminal.

As an alternative to the aforementioned handover to a basestation/access point of the same access network, a terminal could also handover to another (wireless or wire-line) access network using an alternative access technology - provided that the terminal is capable of using that alternative access technology, and that the alternative technology offers a better connection quality or is preferred in accordance with a given rule set comprised in the basestation/access point and/or the terminal. This is also referred to as "heterogenous access management".

For specific connection parameters, there are known prior art approaches disclosing a functional element in the access network which provides the terminal with the required information. Due to commercial reasons and to the disadvantage of the user, this solution as well as other known network based solutions addressing the heterogeneous access management issue will obviously be restricted to the offer of a choice between alternative access networks and associated access technologies provided by the same operator (or by a group of commercially linked operators) as said functional element is part of the access network owned by said operator. On the contrary, for pricing reasons the user argues for an access via a plurality of competitive operators as well as via proprietary networks.

Besides this, concepts are known which describe multi radio technology terminals wherein the terminal itself autonomously scans the availability of radio access networks using built-in radio technologies and uses this self-explored alternative access network information to switch over to an alternative network if connection quality parameters of the active connection fall below the requirements for this type of connection, e.g. bandwidth or quality of service. This approach suffers from the inherent lack of respective mechanisms for providing information about the full range of the different radio access networks and technologies available at the actual location of the mobile telecommunications terminal and for subsequently choosing one of the available access networks and/or access technologies. However, such mechanisms would be important in order to achieve the required connection quality parameters in an actual situation, which is changing dynamically with respect to the actual location and actual telecommunications resources being used, etc., without continuously having to run computing and communication resource intensive mechanisms and decision procedures proprietary to the mobile telecommunications terminal. Particularly, mobile terminals' power consumption is a critical parameter, such that for instance scanning of potential communication channels and other such mechanisms and procedures have to be avoided.

An example of prior art can be found in EP 1551144.

### Object of the invention

It is the object of the invention to provide a method for supporting mobility of at least one mobile telecommunications terminal in operative connection with a telecommunications network having a plurality of telecommunications resources accessible via a plurality of access networks and associated access technologies in operative connection with the telecommunications network, which obviates the diadvantages of the above-mentioned prior art approaches, e.g. by avoiding that mobile telecommunications terminals continuously have to run proprietary computing and communication resource intensive mechanisms and decision procedures in order to find available access networks and technologies.

It is also an object of the invention to provide a telecommunications system of the above-mentioned type as well as a mobility service broker system for use in said telecommunications system which obviate the above-mentioned disadvantages of prior art systems, e.g. by avoiding that mobile terminals have to scan potential communication channels, thus limiting power consumption.

### Description of the invention

This object is achieved by means of a method for supporting mobility of at least one mobile telecommunications terminal in operative connection with a telecommunications network having a plurality of telecommunications resources accessible via a plurality of access networks and associated access technologies in operative connection with the telecommunications network, wherein the mobile telecommunications terminal is provided with information about access networks and access technologies available at least at its present geographic location for choosing an access to the telecommunications network via one of the respective access networks and associated access technologies in accordance with specifications of at least one telecommunications resource requested by the mobile telecommunications terminal, and wherein the information are provided independently of the access networks by means of a mobility service broker system in operative connection with a plurality of access networks.

The object is also achieved by means of a telecommunications system of the above-mentioned type in which the mobility service broker system is adapted to provide the mobile telecommunications terminal with information about access networks and access technologies available at least at a present geographic location of the latter for choosing an access to the telecommunications network via one of the respective access networks and associated access technologies in accordance with specifications of the requested telecommunications resource, and in that the mobility service broker system is adapted to provide the information independently of the access networks.

Furthermore, the object is achieved by means of a mobility service broker system for use in a telecommunications system of the above-mentioned type, which is adapted to provide the mobile telecommunications terminal with information about access networks and access technologies available at least at a present geographic location of the latter for choosing an access to the telecommunications network via one of the respective access networks and associated access technologies in accordance with specifications of the requested telecommunications resource, and in that the mobility service broker system is adapted to provide the information independently of the access networks.

Thus, the invention basically solves the above-mentioned tasks by introducing a network-based cross domain mobility service broker system, which is independent from any access operator and/or access technology. Said broker interfaces to the individual resource managing entities of the various access operators, which manage the available telecommunications resources, possibly of more than one access technology, each of said entities within the scope of one access network operator. The mobility service broker system further sets up an information database which has a full view over the access networks of all operators with which it maintains a commercial relation. This database may preferably include even very local, e.g. WLAN or Bluetooth based, access points. The interface between the mobility service broker system and the specific access managing entities is devised to be a generic one, performing an abstraction of parameters which are specific to a particular access technology.

In a preferred embodiment of the inventive method the information is provided to the mobile telecommunications terminal dynamically in accordance with an access request by the mobile telecommunications terminal. This enables an adaptation of active telecommunications service sessions to changing requirements, e.g. increased bandwidth: State-of-the-art session initialisation protocols like SIP (Session Initiation Protocol; used e.g. in NGN/IMS/TISPAN networks) allow the change of session quality parameters during the lifetime of a connection ("REINVITE", "UPGRADE") which usually changes the required bandwidth and QoS (Quality-of-Service) parameters for the connections concerned. In this context, according to a further development of the inventive method, the information preferably comprises at least one of available network access operator, available network access technology, available communication bandwidth, and available quality of service. Changing the bandwidth and QoS requirements may subsequently require changing the network access, e.g. because the current access does not provide sufficient bandwidth, or the like. In this case the mobility service broker system first evaluates the availability of access networks being able to serve the required bandwidth resource ― said available access networks being "under selection" ― and actively checks the appropriate quality parameters at the location of the terminal. To this end, the mobility service broker system advantageously sends out dynamic request messages to all of the available access networks, preferably upon reception of a corresponding access and/or service request from the mobile telecommunications terminal, i.e. essentially in realtime.

In contrast to the scenario described above, which is based on realtime dynamic requests for the demanded access networks and telecommunications resources issued by the mobility service broker system, an alternative approach consists in estimating the current access parameters based on non-realtime information comprised in the mobility service broker system. In a further development of the inventive method, the information is therefore provided in accordance with non-realtime information comprised in the mobility service broker system.

In order to further enhance mobility support of mobile terminals, hereinafter also referred to as "subscribers", the mobility service broker system can be adapted to perform a prediction of the subscriber's motion direction and the availability of the access networks under selection for a given telecommunication service during a fraction of time, e.g. up to several minutes. According to a corresponding variant of the inventive method, the latter further comprises the steps of: the mobility service broker system performing a prediction of motion of the mobile telecommunications terminal; and the mobility service broker system proposing at least one suitable access network to the mobile telecommunications terminal in accordance with the predicted motion of the mobile telecommunications terminal. Taking into account said information with respect to the motion of the mobile telecommunications terminal, the mobility service broker system proposes the best suited known access network (as found in a static or dynamic map, see below) to the terminal for selecting an access network.

According to a another preferred embodiment of the inventive method, the mobility service broker system proposes at least one access network to the mobile telecommunications terminal in accordance with a prediction of motion of the mobile telecommunications terminal, wherein the prediction is obtained by means of a global map comprised in the mobility service broker system, in particular a digital road map. In this way an additional improvement of the motion prediction can be achieved, since the fastest movements of a typical subscriber are normally achieved on public roads, i.e. a mobile telecommunications terminal carried on board a car. In this context, the term "global" refers to a situation in which the mobility service broker system itself is in (static) possession of all the data necessary to map and predict the motion of the mobile telecommunications terminal, i.e. by means of pre-configured information.

Additionally or alternatively to using said pre-configured information, the mobility service broker system can gather signal strength measurement results received at earlier times from the same or other subscribers from different locations, e.g. different road positions, and categorise route segments with equal signal quality. In terms of the inventive method, the mobility service broker system therefore proposes at least one access network to the mobile telecommunications terminal in accordance with a prediction of motion of the mobile telecommunications terminal, the method further comprising the steps of: the mobility service broker system gathering communication signal quality measurements from the mobile telecommunications terminal and/or other mobile telecommunications terminals in relation with a present motion of the mobile telecommunications terminal; and categorising areas on a global map comprised in the mobility service broker system, in particular route segments on a digital road map, according to the measured signal quality, said category information being used for proposing an access network. The size of the areas (route segments) depends on the signal quality variation. If the signal quality remains within the same category for several hundred meters, then the road segment size will be of the same order of magnitude.

This requires that ― according to the invention ― entities of the mobility service broker system, which are related to different subscribers, exchange quality records to generate said global maps. In other words: Signal quality information related to different mobile telecommunications terminals are exchanged within the mobility service broker system to generate a global map owned by the mobility service broker system for predicting motion of the mobile telecommunications terminal and for proposing at least one access network to the mobile telecommunications terminal in accordance with the predicted motion of the mobile telecommunications terminal. The information exchange is preferably carried out in an anonymised way, i.e. without revealing the identity of a given subscriber to the mobility service broker system. As more and more mobile terminals will be equipped with built-in GPS based localisation systems, the exact location information of these systems can be used to further enhance the delivery of precise data tupels (position, signal strength, access network, provider,...) to the mobility service broker system.

As an alternative to the above-described approach, which relies on the presence of a global map owned by the mobility service broker system, the latter can dynamically collect fragments of said signal quality information from operator specific databases, which are linked to intra-domain mobility management, or from third party databases. Correspondingly, in another variant of the inventive method signal quality information related to different mobile telecommunications terminals are gathered from access network operator owned and/or third party databases by the mobility service broker system to dynamically predict motion of the mobile telecommunications terminal and for proposing at least one access network to the mobile telecommunications terminal in accordance with the predicted motion of the mobile telecommunications terminal.

Advantageously, according to a further development of the inventive method a handover of the mobile telecommunications terminal between different access networks is supported by delivering information related to the mobile telecommunications terminal to an access network available at a future location of the mobile telecommunications terminal. In this way a fast and smooth handover of the subscriber to said access network is possible. In order to ensure seamless connectivity, a proactive handover can also be realised in consistency with the present invention ("make before break" across access network domains).

In order to limit power consumption of the mobile telecommunications terminal, the inventive method optimises the radio access across operator domains by enabling the terminal to perform a handover to another provider and/or radio access technology which offer a required service quality at lower power consumption on the subscriber side by further comprising the step of changing to a different access network and/or access technology for access of the mobile telecommunications terminal to the telecommunications network if the respective access network or access technology offers a service quality required by the mobile telecommunications terminal at lower power consumption than a respective current access network or access technology. To this end, the information provided by the mobility service broker system can include a list of proposed access options based on current situation and service requirements.

In order to optimise the inventive method and the inventive telecommunications system with respect to subscriber costs, the mobility service broker system assures that a currently used service is always transported via the cheapest available access technology. In terms of the inventive method and in a preferred development, the method therefore comprises the step of changing to a different access network and/or access technology for access of the mobile telecommunications terminal to the telecommunications network if the respective access network or access technology offers a service required by the mobile telecommunications terminal at a lower cost. At times when the subscriber does not use any service, the mobility service broker system enables the terminal to automatically switch over to the cheapest available access network and/or technology. As soon as an subsequent incoming connection or the subscriber itself request a connection which requires a higher service quality than the one that is currently being used, the mobility service broker system initiates a handover to an appropriate access network and/or technology prior to establishing said connection. Correspondingly, a variant of the inventive method further comprises the step of changing to a different access network and/or access technology for access of the mobile telecommunications terminal to the telecommunications network if the respective current access network or access technology cannot offer a service or a service quality required by the mobile telecommunications terminal.

Furthermore, the mobility service broker system can be authorised to negotiate and organise payment (based on rules reflecting preferences of the individual subscriber). Particular business scenarios based on dynamic access costs can be supported by this kind of broker concept. The principles described above can be extended to multi-homed solutions, taking benefit from multiple access links which are active at the same time.

The present invention generally provides increased benefit for the end user of the terminal as the latter is always connected in an optimum way in terms of defined priorities such as power saving, service cost, bandwidth/QoS, etc. In order to achieve this, the inventive concept counts on the existence of a customer authorised operator independent broker system, i.e. in the form of said network based broker entities, having standardised interfaces to control entities of the individual access networks. By this means, an access selection and an operator selection, respectively, can be performed while taking into account the specific needs of the customer/subscriber. Furthermore, the subscriber is constantly informed with respect to the availability of network and/or technology accesses, which could not be discovered by the terminal itself, either due to technical limitations or for avoiding network scanning (in order to save energy and to stay continuously connected for incoming data).

Further advantages and characteristics of the present invention can be gathered from the following description of preferred embodiments with reference to the enclosed drawings. The features mentioned above as well as below can be used in accordance with the invention either individually or in conjunction. The embodiments mentioned are not to be understood as an exhaustive enumeration but rather as examples with regard to the underlying concept of the present invention.

### Drawings

- Fig. 1: is a schematic block diagram of a telecommunications system according to the invention;
- Fig. 2: is a detailed schematic block diagram of a mobility service broker system comprised in the inventive telecommunications system in Fig. 1;
- Fig. 3: is a schematic illustration of a map included in the mobility service broker system of Fig. 2;
- Fig. 4: is an enlarged view of an area on the map of Fig. 3;
- Fig. 5: is a flow chart illustrating a first aspect of the inventive method; and
- Fig. 6: is a flow chart illustrating a second aspect of the inventive method.

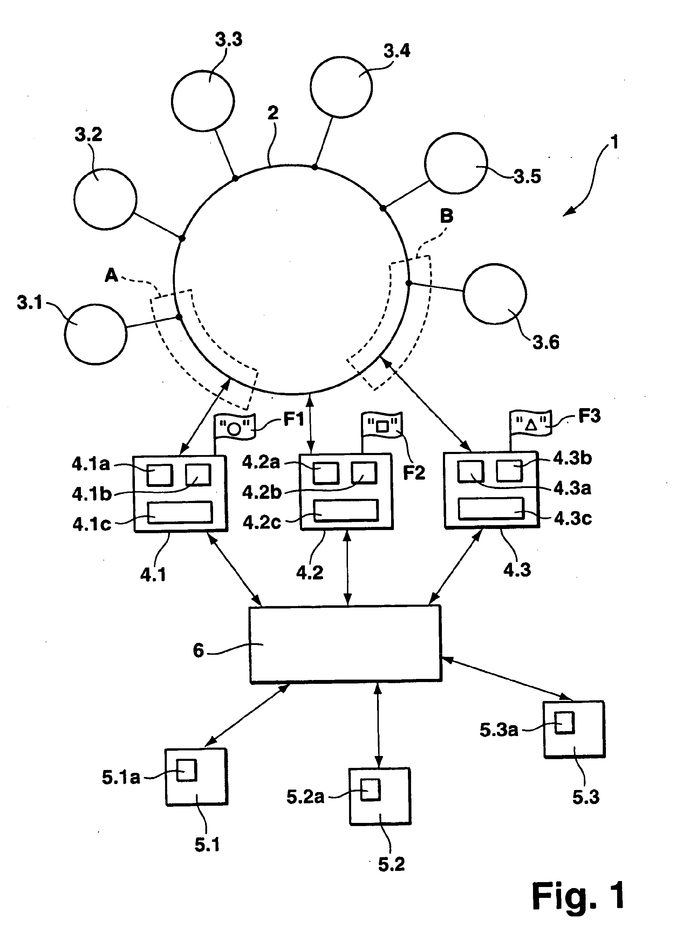

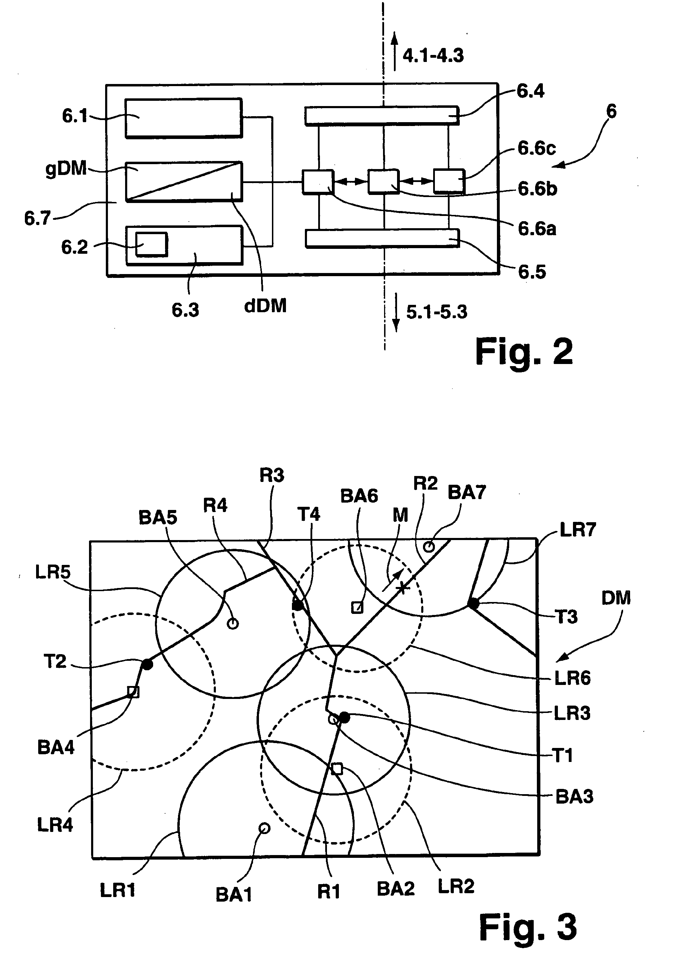

**Fig. 1** shows a telecommunications system **1** (hereinafter referred to as "system") comprising a telecommunications network **2** ("network") having a plurality of telecommunications resources **3.1-3.6** ("resources") accessible via a plurality of access networks **4.1-4.3** and a respective plurality of associated access technologies **4.1a,b-4.3a,b,** which are in operative connection for communication with the network 2. The access networks 4.1-4.3 are marked with a symbolic flag **F1-F3,** the significance of which will become apparent later with reference to Fig. 3. Furthermore, each access network 4.1-4.3 comprises an access managing entity **4.1c-4.3c** for managing user access to the respective access network. The resources 3.1-3.6 offer a variety of services to a user who accesses the network 2, and can be proprietary of a given access network operator (as indicated by the dashed (virtual) network areas **A, B**) each encompassing an access network 4.1 and 4.3, respectively, and a proprietary resource 3.1 and 3.6, respectively. In this context, the resources 3.1-3.6 have diverse specifications with respect to at least one of input specifications, function carried out, output specifications, information for accounting purposes, subscription terms and resource utilisation limitations, in particular bandwidth and quality of service (QoS) requirements for the respective resource related service.

Furthermore, the system 1 comprises a number of mobile telecommunications terminals **5.1-5.3** ("terminals"), e.g. cellular phones, accessing the network 2 via one of the plurality of access networks 4.1-4.3 and a specific associated access technology 4.1a,b-4.3a,b for requesting and subsequently using a service provided by at least one of the resources 3.1-3.6. Each of the terminals 5.1-5.3 comprises a decision unit **5.1a-5.3a** for choosing between a plurality of available access networks 4.1-4.3 and/or a plurality of available access technologies 4.1 a,b-4.3a,b, as will be explained in more detail below.

However, in accordance with the basic concept of the invention, the terminals do not communicate directly with one of the access networks 4.1-4.3. Instead, the system 1 comprises a mobility service broker system **6** ("broker") in operative connection with the access networks 4.1-4.3, i.e. the terminals 5.1-5.3 indirectly communicate with the access networks 4.1-4.3 via the broker 6. It is an important feature of the present invention that the broker 6 be independent from the access network operators. In this way, a user sends a service request to the broker 6 by means of a terminal 5.1-5.3. The broker 6 then proposes one or several locally available access networks 4.1-4.3 and/or access technologies 4.1a,b-4.3a,b to the respective terminal 5.1-5.3, which meet certain service related communication requirements, e.g. bandwidth. The choice is then made by the respective decision unit 5.1 a-5.3a based on a set of rules provided or approved by the terminal user.

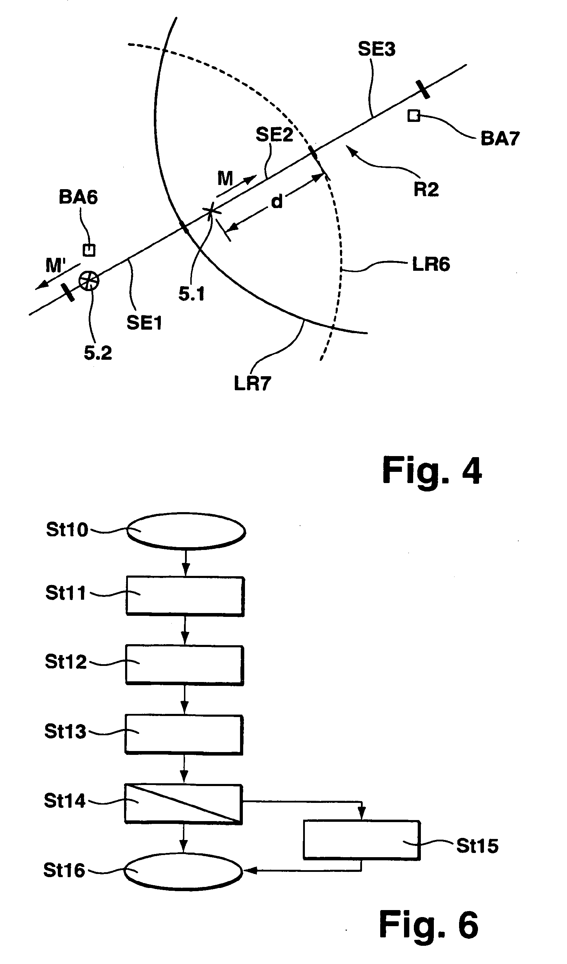

To this end, with reference to **Fig. 2****,** the broker system 6 comprises a database **6.1** including information about the specifications of the telecommunication resources 3.1-3.6 and a matching unit **6.2** for matching telecommunication resources 3.1-3.6 to meet a service request by the mobile telecommunications terminal 5.1-5.3, said matching unit preferably being devised as a software element comprised and executed in a suitable data processing unit **6.3,** e.g. a microprocessor. For communication with the access networks 4.1-4.3 on one hand and with mobile terminals 5.1-5.3 on the other, the broker 6 further comprises respective interfaces **6.4, 6.5.** By means of these the broker 6 interfaces to the individual access managing entities 4.1 c-4.3c of the various access operators 4.1-4.3, which also manage the available telecommunications resources, either within the scope of a given access network operator only (proprietary resources) or extending also to free or operator independent services, e.g. resources 3.2-3.5 (Fig. 1). At least the interface 6.4 between the broker 6 and the specific access managing entities 4.1 c-4.3c is devised to be a generic one, i.e. it performs an abstraction of parameters which are specific to a particular access technology, thus providing a basis for comparison of access possibilities regardless of a particular technology and its inherent set of parameters. Despite the generic nature of the interfaces 6.4, 6.5, the broker system 6 further comprises entities **6.6a-c,** realised preferably in software form, which are related to different subscribers ("subscriber related entities") and which are adapted to exchange communication related data, e.g. QoS data, for respective different subscribers in an anonymised way, i.e. without revealing the identity of a given subscriber to a non-related subscriber entity 6.6a-c. Said exchanges are illustrated in Fig. 2 by means of doubleheaded arrows between individual entities 6.6a-c. Since an increasing number of mobile terminals 5.1-5.3 are equipped with GPS based localisation systems, said exchange data could include an exact location of a respective terminal thus enabling the broker 6 to accurately trace a plurality of mobile terminals 5.1-5.3 with respect to their positions and communication situation (access network used, QoS, etc.). Finally, the broker 6 comprises a suitable storage means **6.7,** either volatile or nonvolatile, for storing global **gDM** and/or a dynamic **dDM** maps of at least one area covered by the telecommunications network 2 comprised in the inventive telecommunications system 1 (Fig. 1). The maps preferably are digital maps, e.g. digital road maps in the present embodiment of the invention. For reasons that will become apparent later, the global map gDM is also referred to as a static map. According to the invention the data exchange within the broker system 6 is used to generate a global map owned by the broker for predicting motion of the mobile telecommunications terminal, as will now be described with reference to Figs 3 and 4.

**Fig. 3** shows an exemplary digital road map **DM** contained in the above-described broker 6. Apart from roads **R1-R4** and towns or agglomerations **T1-T4,** the map DM indicates the locations of a number of basestations/access points **BA1-BA7** corresponding to two of the access networks in Fig. 1 (marked "□" and "○", respectively; cf. flags F1 and F2). The limiting ranges of the individual basestations/access points BA1-BA7 are shown by means of circles **LR1-LR7** around the location of the respective basestation/access point, ranges of the "□"-network 4.1 (Fig. 1) being denoted by solid lines and ranges of the "o"-network 4.2 (Fig. 1) being denoted by dashed lines, respectively. Within said range limits, the corresponding access network and the associated access technologies can on principle be accessed by a mobile telecommunications terminal 5.1-5.3 (Fig. 1), such as marked "x" in Fig. 3, e.g. terminal 5.1, whose current motion is indicated by an arrow **M.** In overlapping range areas, a plurality of access networks and/or technologies are thus availabe to the terminal "x", i.e. access networks 4.1 ("□") and 4.2 ("○") and associated access technologies for the present location of terminal 5.1.

In order to improve mobility support, particularly at range limits, broker 6 (Figs 1, 2) by means of its data processing unit 6.3 in cooperation with said maps gDM, dDM predicts the direction of motion of terminal 5.1 as well as the availability of access networks under selection for a given telecommunication service (request) during a predetermined time span, e.g. up to several minutes. This is illustrated in **Fig. 4****,** which shows an enlarged detail of the digital map DM in Fig. 3. Corresponding elements have been denoted with the same reference numerals. In addition to terminal 5.1 another mobile telecommunications terminal 5.2 (marked "⊗") is present on route R2 and is moving in a direction **M'** opposite that of terminal 5.1, which is presently located at a distance **d** from the range limit LR6 of basestation/access point BA6. Said distance d corresponds to a time t after which the terminal 5.1 will leave the range of basestation/access point BA6, which will thus no longer be available. The inventive broker system having performed said prediction of motion of the mobile telecommunications terminal 5.1 proposes at least one suitable access network in accordance with said prediction. In the given example, this would mean proposing a handover to basestation/access point BA7 before said time t has elapsed in order not to lose connectivity to the network 2 (Fig. 1) and delivering information related to the mobile telecommunications terminal 5.1-5.3 to an access network 4.1-4.3 available at a future location of the mobile telecommunications terminal 5.1-5.3. If ― contrary to the highly simplified situation depicted in Figs 3 and 4 ― more than just one or two access networks and/or access technologies should be available, taking into account said information with respect to the motion of the mobile telecommunications terminal, the mobility broker proposes the best suited known access network to the terminal for selecting an access network.

In contrast to the above-described pre-configured information, the broker system can gather signal strength measurement results received earlier from the same or other subscribers, e.g. terminal 5.2 ("⊗") in Fig. 4, from different locations, e.g. different road positions, and dynamically categorise route segments with equal signal quality. For illustration purposes, Fig. 4 shows three such route segments **SE1-SE3** along route R2. Using said categorisation, the broker therefore need not send new access propositions to a mobile terminal if the latter ― in accordance with a prediction of its motion ― is not bound to leave a currently occupied categorised route segment SE1-SE3 during a predetermined time span, the length of which obviously will depend on the speed of motion of the terminal and on the size of the segment in question. To this end, as stated before, broker system gathers communication signal quality measurements from a number of mobile terminals, e.g. terminals 5.1 and 5.2 in Fig. 4, in relation with a present motion of the mobile terminal in question, i.e. terminal 5.1. For instance, as the other terminal "⊗" 5.2 has just passed an area, i.e. segment SE3, terminal "□" 5.1 is about to enter, signal quality measurements by said other terminal can easily be used to dynamically predict and propose a communications connection situation for the terminal in question. Said categorised areas SE1-SE3 are preferably stored in connection with said global map gDM comprised in the mobility service broker system 6 (Fig. 2), in particular in the form of route segments on a digital road map, according to the measured signal quality. A generic example for the information stored in connection with said global map gDM is given in the following table for route R2 (Figs 3, 4), wherein the signal quality is given in arbitrary units:

| segment | location | available access points | signal quality |
|---|---|---|---|
| SE1 | <GPS data SE1> | BA6 | 3 |
| SE2 | <GPS data SE2> | BA6 / BA7 | 2/1,5 |
| SE3 | <GPS data SE3> | BA7 | 2,5 |
| ... | <GPS data SE...> | ... | ... |

This feature of the inventive method can advantageously be used for ensuring smooth handovers by prematurely changing an access network and/or technology, e.g. switching from BA6 to BA7 already in segment SE2 or at the boundary of segments SE1 and SE2 instead of waiting until the boundary of segments SE2 and SE3 is reached and BA6 abruptly is no longer available. Such an early handover is also advantageous for reducing power consumption (traffic load) in the telecommunications terminal. Furthermore, the broker is capable of making a well-founded decision regarding the handover, since besides signal quality information, the direction of motion of the terminal can be taken into account, thus reducing the number of handovers. As stated before, basestation BA7, i.e. the corresponding access network, will be informed by the broker prior to the actual handover.

Although in Fig. 4 the segments SE1-SE3 are all roughly of equal size, in practice the size of the route segments will depend on the signal quality variation: If the signal quality essentially remains constant within predetermined limits the corresponding area will be categorised as one road segment.

In order to be able to generate said global digital maps gDM, broker entities 6.6a,b,c (Fig. 2), which are related to different terminals/subscribers, exchange said quality information, preferably in an anonymised form, i.e. without revealing the identity of a given subscriber to the mobility service broker system and/or the access network or service operators. Said information is solely used for making a statistical data analysis of a plurality of terminals/subscribers thus deriving connection parameters with respect to particular areas covered by the telecommunications system according to the invention. As more and more mobile terminals comprise GPS based localisation systems, the location information will be rather exact, thus resulting in the delivery of precise data tupels (position, signal strength, access network, provider,...) to the mobility service broker system.

As an alternative to the above-described approach, which relies on the presence of a global map gDM owned by the broker, the latter can dynamically collect fragments of said signal quality information from operator specific databases, which are linked to intra-domain mobility management, or from third party databases. Correspondingly, the broker 6 (Fig. 1) directly addresses said other databases (not shown) to extract information therefrom which allow predicting and proposing a communications situation (in terms of acces network and/or technology to be used) for a given mobile terminal at a given location, taking into account motion related effects. This information can at least temporarily be stored in said broker storage means 6.7 (Fig. 2) and can ― in consistency with the nomenclature used so far ― be referred to as a dynamical map dDM.

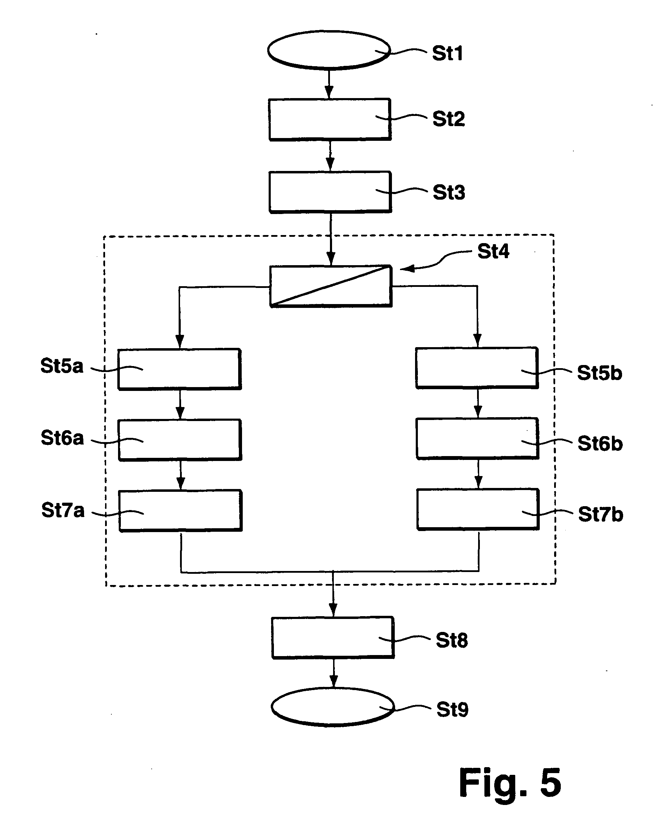

**Fig. 5** is a flow chart illustrating a first (major) aspect of the method according to the present invention. The method starts with step **ST1.** In subsequent step **ST2** a terminal, e.g. mobile terminal 5.1 (Figs 1, 3, and 4), sends an access request to the broker 6 (Figs 1, 2) which includes demanding a particular resource 3.1-3.6 (Fig. 1), which is offered in connection with the network 2 (Fig. 1). Said request can be aimed at establishing a new communications connection with said resource from the present location of the mobile terminal, or can alternatively be directing at updating/holding a connection which is already active between the terminal in question and said resource (or another resource offering an equivalent service). In a following step **ST3,** the broker 6, which is in operative connection with a plurality of access networks 4.1-4.3 (Fig. 1), receives said request from the terminal and consults its database 6.1 (Fig. 2) in order to determine access networks and access technologies, which are both available at the location of the requesting terminal and which offer connection parameters suitable for the requested resource/service, e.g. bandwidth and/or QoS. In subsequent step **ST4** the broker decides whether to use the global (static) or the dynamic approach as described above, based on the information contained in its database. If, e.g., said information is outdated, the broker may preferably decide to use the dynamic approach. The same holds if the broker does not yet have any global information with respect to the present location of the requesting terminal. However, information gained through said dynamic approach could later be used to extend and complete the global map comprised in the inventive mobility service broker system. If said global approach is chosen (steps **ST5a-ST7a),** the broker first predicts the motion of the terminal in step ST5a, then consults the global map and the associated communication signal quality information in step ST6a, and finally proposes at least one access network and an associated access technology in step ST7a. Alternatively, in the dynamic approach (steps **ST5b-ST7b),** first a motion prediction is carried out in step ST5b, then the broker gathers information from other terminals and/or proprietary operator databases as well as third party databases as described above in step ST6b, and finally proposes at least one access network and an associated access technology in step ST7b based on the dynamically gathered information. In common subsequent step **ST8** the terminal then decides on one of the proposed access networks and/or technologies by means of its decision unit 5.1 a-5.3a (Fig. 1). The inventive method ends with step **ST9.**

**Fig. 6** is a flow chart illustrating a further aspect of the method according to the present invention. The method, which is preferably carried out regularly and repeatedly during operation of the inventive system 1 (Fig. 1), starts with step **ST10.** In subsequent step **ST11** the broker 6 (Figs 1, 2) checks an active connection of a terminal with a network resource via a particular access network and/or technology, e.g. with respect to connection prices, power consumption, present location of the mobile terminal, etc. In subsequent step **ST12** the broker consults its database to determine whether or not another access network and/or technology might be preferred, e.g. due to degradation of quality parameters, or because the present connection has been active without changes for more than a predetermined period of time. Step ST12 may also include evaluating the availability of access networks being able to serve the required resource as well as actively checking the appropriate quality parameters at the location of the terminal. To this end, the mobility service broker system advantageously sends out dynamic request messages to all of the available access networks. Subsequent step **ST13** (depicted in dashed lines) includes the totality of steps ST4 to ST8 in Fig. 5 (as likewise indicated by a dashed box in said Figure). Depending on whether or not the active connection should be changed due to pricing reasons, bandwidth requirement, or the like, in subsequent step **ST14** the broker either proposes an alternative access network and/or technology to the terminal, which decides in a subsequent step **ST15** (cf. step ST9 described above) prior to the end of the method in step **ST16,** or no such proposition is made, such that step said ST16 directly follows said step ST14.

In this way, it is possible to change to a different access network and/or access technology if the said different access network or access technology offers a service quality required by the mobile terminal at lower power consumption or at a lower cost than the current access network or access technology. Also, the present access network and/or access technology can be changed if the respective current access network or access technology cannot offer a service or a service quality required by the mobile terminal, e.g. due to a limitation of available bandwidth.

## Claims

1. Method for supporting mobility of at least one mobile telecommunications terminal (5.1-5.3) in operative connection with a telecommunications network (2) having a plurality of telecommunications resources (3.1-3.6) accessible via a plurality of access networks (4.1-4.3) and associated access technologies (4.1a,b-4.3a,b) in operative connection with the telecommunications network (2), wherein the mobile telecommunications terminal (5.1-5.3) is provided with information about access networks (4.1-4.3) and access technologies (4.1a,b-4.3a,b) available at least at its present geographic location for choosing an access to the telecommunications network (2) via one of the respective access networks (4.1-4.3) and associated access technologies (4.1a,b-4.3a,b) in accordance with specifications of at least one telecommunications resource (3.1-3.6) requested by the mobile telecommunications terminal (5.1-5.3), and wherein the information are provided independently of the access networks (4.1-4.3) by means of a mobility service broker system (6) in operative connection with a plurality of access networks (4.1-4.3).

2. Method according to claim 1, **characterised in that** the mobility service broker system (6) evaluates the availability of access networks (4.1-4.3) being able to provide the requested resource (3.1-3.6) by sending out dynamic request messages to the available access networks (4.1-4.3), preferably upon reception of a corresponding access and/or service request from the mobile telecommunications terminal (5.1-5.3), and that the mobility service broker system (6) actively checks the appropriate quality parameters at the location of the mobile telecommunications terminal (5.1-5.3).

3. Method according to claim 1, **characterised in that** the information is provided in accordance with non-realtime information comprised in the mobility service broker system (6).

4. Method according to claim 1, **characterised in that** the information comprises at least one of available network access operator (4.1-4.3), available network access technology (4.1 a,b-4.3a,b), available communication bandwidth, and available quality of service.

5. Method according to claim 1, further comprising the steps of:
- the mobility service broker system (6) performing a prediction of motion (M) of the mobile telecommunications terminal (5.1), and
- the mobility service broker system (6) proposing at least one suitable access network (4.1-4.3) to the mobile telecommunications terminal (5.1) in accordance with the predicted motion (M) of the mobile telecommunications terminal (5.1).

6. Method according to claim 1, **characterised in that** the mobility service broker system (6) proposes at least one access network (4.1-4.3) to the mobile telecommunications terminal (5.1-5.3) in accordance with a prediction of motion of the mobile telecommunications terminal (5.1-5.3), wherein the prediction is obtained by means of a global map (gDM) comprised in the mobility service broker system (6), in particular a digital road map.

7. Method according to claim 1, **characterised in that** the mobility service broker system (6) proposes at least one access network (4.1-4.3) to the mobile telecommunications terminal (5.1-5.3) in accordance with a prediction of motion of the mobile telecommunications terminal (5.1-5.3), further comprising the steps of:
- the mobility service broker system (6) gathering communication signal quality measurements from the mobile telecommunications terminal (5.1-5.3) and/or other mobile telecommunications terminals (5.1-5.3) in relation with a present motion of the mobile telecommunications terminal (5.1-5.3), and
- categorising areas (SE1-SE3) on a global map (gDM) comprised in the mobility service broker system (6), in particular a digital road map, according to the measured signal quality.

8. Method according to claim 1, **characterised in that** a handover of the mobile telecommunications terminal (5.1-5.3) between different access networks (4.1-4.3) is supported by delivering information related to the mobile telecommunications terminal (5.1-5.3) to an access network (4.1-4.3) available at a future location of the mobile telecommunications terminal (5.1-5.3).

9. Method according to claim 1, **characterised in that** signal quality information related to different mobile telecommunications terminals (5.1-5.3) are exchanged within the mobility service broker system (6) to generate a global map (gDM) owned by the mobility service broker system (6) for predicting motion (M) of the mobile telecommunications terminal (5.1-5.3) and for proposing at least one access network (4.1-4.3) to the mobile telecommunications terminal (5.1-5.3) in accordance with the predicted motion of the mobile telecommunications terminal (5.1-5.3).

10. Method according to claim 1, **characterised in that** signal quality information related to different mobile telecommunications terminals (5.1-5.3) are gathered from access network operator owned and/or third party data bases by the mobility service broker system (6) for dynamically predicting motion (M) of the mobile telecommunications terminal (5.1-5.3) and for proposing at least one access network (4.1-4.3) to the mobile telecommunications terminal (5.1-5.3) in accordance with the predicted motion of the mobile telecommunications terminal (5.1-5.3).

11. Method according to claim 1, further comprising the step of changing to a different access network (4.1-4.3) and/or access technology (4.1a,b-4.3a,b) for access of the mobile telecommunications terminal (5.1-5.3) to the telecommunications network (2) if the respective access network (4.1-4.3) or access technology (4.1a,b-4.3a,b) offers a service quality required by the mobile telecommunications terminal (5.1-5.3) at lower power consumption than a respective current access network (4.1-4.3) or access technology (4.1a,b-4.3a,b).

12. Method according to claim 1, further comprising the step of changing to a different access network (4.1-4:3) and/or access technology (4.1 a,b-4.3a,b) for access of the mobile telecommunications terminal (5.1-5.3) to the telecommunications network (2) if the respective access network (4.1-4.3) or access technology (4.1a,b-4.3a,b) offers a service required by the mobile telecommunications terminal (5.1-5.3) at a lower cost than a respective current access network (4.1-4.3) or access technology (4.1 a,b-4.3a,b).

13. Method according to claim 1, further comprising the step of changing to a different access network (4.1-4.3) and/or access technology (4.1a,b-4.3a,b) for access of the mobile telecommunications terminal (5.1-5.3) to the telecommunications network (2) if the respective current access network (4.1-4.3) or access technology (4.1a,b-4.3a,b) cannot offer a service or a service quality required by the mobile telecommunications terminal (5.1-5.3).

14. Telecommunications system (1), in particular for carrying out the method according to any one of claims 1 to 13, comprising:
- a telecommunications network (2) having a plurality of telecommunications resources (3.1-3.6) accessible via a plurality of access networks (4.1-4.3) and associated access technologies (4.1a,b-4.3a,b) in operative connection with the telecommunications network (2), wherein the telecommunications resources (3.1-3.6) have diverse specifications with respect to at least one of input specifications, function carried out, output specifications, information for accounting purposes, subscription terms and resource utilisation limitations, in particular bandwidth and quality of service requirements,
- at least one mobile telecommunications terminal (5.1-5.3) accessing the telecommunications network (2) via one of the plurality of access networks (4.1-4.3) and associated access technologies (4.1 a,b-4.3a,b) for requesting a service provided by at least one of the telecommunication resources (3.1-3.6), and
- a mobility service broker system (6) in operative connection with a plurality of access networks (4.1-4.3), comprising a database including information about the specifications of the telecommunication resources (3.1-3.6) and a matching unit (6.2) for matching telecommunication resources (3.1-3.6) to meet a service request by the mobile telecommunications terminal (5.1-5.3),
**characterised in that** the mobility service broker system (6) is adapted to provide the mobile telecommunications terminal (5.1-5.3) with information about access networks (4.1-4.3) and access technologies (4.1a,b-4.3a,b) available at least at a present geographic location of the latter for choosing an access to the telecommunications network (2) via one of the respective access networks (4.1-4.3) and associated access technologies (4.1 a,b-4.3a,b) in accordance with specifications of the requested telecommunications resource (3.1-3.6), and **in that** the mobility service broker system (6) is adapted to provide the information independently of the access networks (4.1-4.3).

15. Mobility service broker system (6) for use in a telecommunications system (1) according to the preamble of claim 14, **characterised in that** the mobility service broker system (6) is adapted to provide the mobile telecommunications terminal (5.1-5.3) with information about access networks (4.1-4.3) and access technologies (4.1 a,b-4.3a,b) available at least at a present geographic location of the latter for choosing an access to the telecommunications network (2) via one of the respective access networks (4.1-4.3) and associated access technologies (4.1 a,b-4.3a,b) in accordance with specifications of the requested telecommunications resource (3.1-3.6), and **in that** the mobility service broker system (6) is adapted to provide the information independently of the access networks (4.1-4.3).

## Patentansprüche

1. Verfahren zur Unterstützung der Mobilität mindestens eines mobilen Telekommunikationsendgerätes (5.1-5.3) in funktionsfähiger Verbindung mit einem Telekommunikationsnetz (2), das eine Vielzahl von Telekommunikationsressourcen (3.1-3.6) aufweist, die über eine Vielzahl von Zugangsnetzen (4.1-4.3) und zugeordneten Zugangstechnologien (4.1a,b-4.3a,b) in funktionsfähiger Verbindung mit dem Telekommunikationsnetz (2) zugänglich sind, in welchem das mobile Telekommunikationsendgerät (5.1-5.3) mit Informationen über Zugangsnetze (4.1-4.3) und Zugangstechnologien (4.1a,b-4.3a,b) versehen wird, die mindestens an ihrem gegenwärtigen geografischen Standort zum Auswählen eines Zugangs zum Telekommunikationsnetz (2) über eines der jeweiligen Zugangsnetze (4.1-4.3) und zugeordneten Zugangstechnologien (4.1a,b-4.3a,b) gemäß den Spezifikationen der mindestens einen Telekommunikationsressource (3.1-3.6) zur Verfügung stehen, die durch das mobile Telekommunikationsendgerät (5.1-5.3) angefordert wurde, und in welchem die Informationen unabhängig von den Zugangsnetzen (4.1-4.3) mittels eines Mobilitätsdienst-Brokersystems (6) in funktionsfähiger Verbindung mit einer Vielzahl von Zugangsnetzen (4.1- 4.3) bereitgestellt werden.

2. Verfahren nach Anspruch 1, **dadurch gekennzeichnet, daß** das Mobilitätsdienst-Brokersystem (6) die Verfügbarkeit der Zugangsnetze (4.1-4.3) bewertet, die in der Lage sind, die angeforderte Ressource (3.1-3.6) durch Aussenden dynamischer Anforderungsmeldungen an die verfügbaren Zugangsnetze (4.1-4.3) bereitzustellen, vorzugsweise nach Empfang einer entsprechenden Zugangs- und/oder Dienstanforderung vom mobilen Telekommunikationsendgerät (5.1-5.3), und daß das Mobilitätsdienst-Brokersystem (6) aktiv die entsprechenden Güteparameter am Standort des mobilen Telekommunikationsendgerätes (5.1-5.3) kontrolliert.

3. Verfahren nach Anspruch 1, **dadurch gekennzeichnet, daß** die Informationen gemäß Nicht-Echtzeit-Informationen bereitgestellt werden, die im Mobilitätsdienst-Brokersystem (6) enthalten sind.

4. Verfahren nach Anspruch 1, **dadurch gekennzeichnet, daß** die Informationen mindestens einen verfügbaren Netzzugangsbetreiber (4.1-4.3), verfügbare Netzzugangstechnologie (4.1a,b-4.3a,b), verfügbare Kommunikationsbandbreite und verfügbare Dienstgüte umfassen.

5. Verfahren nach Anspruch 1, außerdem umfassend die Schritte:
- das Mobilitätsdienst-Brokersystem (6), das eine Vorhersage der Bewegung (M) des mobilen Telekommunikationsendgerätes (5.1) durchführt, und
- das Mobilitätsdienst-Brokersystem (6), das mindestens ein geeignetes Zugangsnetz (4.1-4.3) für das mobile Telekommunikationsendgerät (5.1) gemäß der vorhergesagten Bewegung (M) des mobilen Telekommunikationsendgerätes (5.1) vorschlägt.

6. Verfahren nach Anspruch 1, **dadurch gekennzeichnet, daß** das Mobilitätsdienst-Brokersystem (6) mindestens ein Zugangsnetz (4.1-4.3) für das mobile Telekommunikationsendgerät (5.1-5.3) gemäß einer Vorhersage der Bewegung des mobilen Telekommunikationsendgerätes (5.1-5.3) vorschlägt, in welchem die Vorhersage mittels einer globalen Karte (gDM) erhalten wird, die im Mobilitätsdienst-Brokersystem (6) enthalten ist, insbesondere einer digitalen Straßenkarte.

7. Verfahren nach Anspruch 1, **dadurch gekennzeichnet, daß** das Mobilitätsdienst-Brokersystem (6) mindestens ein Zugangsnetz (4.1-4.3) für das mobile Telekommunikationsendgerät (5.1-5.3) gemäß einer Vorhersage der Bewegung des mobilen Telekommunikationsendgerätes (5.1-5.3) vorschlägt, außerdem umfassend die Schritte:
- das Mobilitätsdienst-Brokersystem (6), das Kommunikationssignal-Gütemessungen vom mobilen Telekommunikationsendgerät (5.1-5.3) und/oder anderen mobilen Telekommunikationsendgeräte (5.1-5.3) bezüglich einer vorliegenden Bewegung des mobilen Telekommunikationsendgerätes (5.1-5.3) erfaßt, und
- Kategorisieren der Gebiete (SE1-SE3) auf einer globalen Karte (gDM), die im Mobilitätsdienst-Brokersystem (6) enthalten ist, insbesondere einer digitalen Straßenkarte, gemäß der gemessenen Signalgüte.

8. Verfahren nach Anspruch 1, **dadurch gekennzeichnet, daß** ein Handover des mobilen Telekommunikationsendgerätes (5.1-5.3) zwischen verschiedenen Zugangsnetzen (4.1-4.3) durch Übergabe von Informationen unterstützt wird, die das mobile Telekommunikationsendgerät (5.1-5.3) betreffen, an ein Zugangsnetz (4.1-4.3), das am zukünftigen Standort des mobilen Telekommunikationsendgerätes (5.1-5.3) zur Verfügung steht.

9. Verfahren nach Anspruch 1, **dadurch gekennzeichnet, daß** die Signalgüteinformationen, die verschiedene mobile Telekommunikationsendgeräte (5.1-5.3) betreffen, innerhalb des Mobilitätsdienst-Brokersystems (6) ausgetauscht werden, um eine globale Karte (gDM) zu erzeugen, die dem Mobilitätsdienst-Brokersystem (6) zum Vorhersagen der Bewegung (M) des mobilen Telekommunikationsendgerätes (5.1-5.3) und zum Vorschlagen mindestens eines Zugangsnetzes (4.1-4.3) für das mobile Telekommunikationsendgerät (5.1-5.3) gemäß der vorhergesagten Bewegung des mobilen Telekommunikationsendgerätes (5.1-5.3) gehört.

10. Verfahren nach Anspruch 1, **dadurch gekennzeichnet, daß** die Signalgüteinformationen, die verschiedene mobile Telekommunikationsendgeräte (5.1-5.3) betreffen, vom eigenen Zugangsnetzbetreiber und/oder Fremddatenbanken durch das Mobilitätsdienst-Brokersystem (6) zum dynamischen Vorhersagen der Bewegung (M) des mobilen Telekommunikationsendgerätes (5.1-5.3) und zum Vorschlagen mindestens eines Zugangsnetzes (4.1-4.3) für das mobile Telekommunikationsendgerät (5.1-5.3) gemäß der vorhergesagten Bewegung des mobilen Telekommunikationsendgerätes (5.1-5.3) erfaßt werden.

11. Verfahren nach Anspruch 1, außerdem umfassend den Schritt des Wechselns zu einem verschiedenen Zugangsnetz (4.1-4.3) und/oder Zugangstechnologie (4.1a,b-4.3a,b) für den Zugang des mobilen Telekommunikationsendgerätes (5.1-5.3) zum Telekommunikationsnetz (2), wenn das jeweilige Zugangsnetz (4.1-4.3) oder Zugangstechnologie (4.1a,b-4.3a,b) eine Dienstgüte bieten, die durch das mobile Telekommunikationsendgerät (5.1-5.3) erfordert wurde, bei geringerem Leistungsverbrauch als ein jeweiliges aktuelles Zugangsnetz (4.1-4.3) oder Zugangstechnologie (4.1a,b-4.3a,b).

12. Verfahren nach Anspruch 1, außerdem umfassend den Schritt des Wechselns zu einem verschiedenen Zugangsnetz (4.1-4.3) und/oder Zugangstechnologie (4.1a,b-4.3a,b) für den Zugang des mobilen Telekommunikationsendgerätes (5.1-5.3) zum Telekommunikationsnetz (2), wenn das jeweilige Zugangsnetz (4.1-4.3) oder Zugangstechnologie (4.1a,b-4.3a,b) einen Dienst bietet, der durch das mobile Telekommunikationsendgerät (5.1-5.3) erfordert wurde, bei geringeren Kosten als ein jeweiliges aktuelles Zugangsnetz (4.1-4.3) oder Zugangstechnologie (4.1a,b-4.3a,b).

13. Verfahren nach Anspruch 1, außerdem umfassend den Schritt des Wechselns zu einem verschiedenen Zugangsnetz (4.1-4.3) und/oder Zugangstechnologie (4.1a,b-4.3a,b) für den Zugang des mobilen Telekommunikationsendgerätes (5.1-5.3) zum Telekommunikationsnetz (2), wenn das jeweilige aktuelle Zugangsnetz (4.1-4.3) oder Zugangstechnologie (4.1a,b-4.3a,b) keinen Dienst oder keine Dienstgüte bieten kann, die durch das mobile Telekommunikationsendgerät (5.1-5.3) erfordert wurde.

14. Telekommunikationssystem (1), insbesondere zum Durchführen des Verfahrens nach einem der Ansprüche 1 bis 13, umfassend:
- ein Telekommunikationsnetz (2), das eine Vielzahl von Telekommunikationsressourcen (3.1-3.6) aufweist, die über eine Vielzahl von Zugangsnetzen (4.1-4.3) und zugeordneten Zugangstechnologien (4.1a,b-4.3a,b) in funktionsfähiger Verbindung mit dem Telekommunikationsnetz (2) zugänglich sind, in welchem die Telekommunikationsressource (3.1-3.6) diverse Spezifikationen bezüglich mindestens einer der Eingangsspezifikationen, durchgeführten Funktion, Ausgangsspezifikationen, Informationen zu Abrechnungszwecken, Anmeldungsbedingungen und Einschränkungen der Ressourcennutzung, insbesondere Bandbreite und Dienstgüteanforderungen aufweisen,
- mindestens ein mobiles Telekommunikationsendgerät (5.1-5.3), das auf das Telekommunikationsnetz (2) über eines der Vielzahl der Zugangsnetze (4.1-4.3) und zugeordneten Zugangstechnologien (4.1a,b-4.3a,b) zugreift, um einen Dienst anzufordern, der durch mindestens eine der Telekommunikationsressourcen (3.1-3.6) bereitgestellt wird, und
- ein Mobilitätsdienst-Brokersystem (6) in funktionsfähiger Verbindung mit einer Vielzahl von Zugangsnetzen (4.1-4.3), die eine Datenbank umfassen, die Informationen über die Spezifikationen der Telekommunikationsressourcen (3.1-3.6) und eine Anpassungseinheit (6.2) zum Anpassen der Telekommunikationsressourcen (3.1-3.6) einschließt, um eine Dienstanforderung durch das mobile Telekommunikationsendgerät (5.1-5.3) zu erfüllen, **dadurch gekennzeichnet, daß** das Mobilitätsdienst-Brokersystem (6) angepaßt ist, um für das mobile Telekommunikationsendgerät (5.1-5.3) Informationen über Zugangsnetze (4.1-4.3) und Zugangstechnologien (4.1a,b-4.3a,b) bereitzustellen, die mindestens an einem vorliegenden geografischen Standort des letzteren zum Auswählen eines Zugangs auf das Telekommunikationsnetz (2) über eines der jeweiligen Zugangsnetze (4.1-4.3) und zugeordneten Zugangstechnologien (4.1a,b-4.3a,b) gemäß den Spezifikationen der angeforderten Telekommunikationsressource (3.1-3.6) zur Verfügung stehen, und daß das Mobilitätsdienst-Brokersystem (6) angepaßt ist, um die Informationen unabhängig von den Zugangsnetzen (4.1-4.3) bereitzustellen.

15. Mobilitätsdienst-Brokersystem (6) zur Verwendung in einem Telekommunikationssystem (1) gemäß dem Oberbegriff nach Anspruch 14, **dadurch gekennzeichnet, daß** das Mobilitätsdienst-Brokersystem (6) angepaßt ist, um für das mobile Telekommunikationsendgerät (5.1-5.3) Informationen über Zugangsnetze (4.1-4.3) und Zugangstechnologien (4.1a,b-4.3a,b) bereitzustellen, die mindestens an einem vorliegenden geografischen Standort des letzteren zum Auswählen eines Zugangs zum Telekommunikationsnetz (2) über eines der jeweiligen Zugangsnetze (4.1-4.3) und zugeordneten Zugangstechnologien (4.1a,b-4.3a,b) gemäß den Spezifikationen der angeforderten Telekommunikationsressource (3.1-3.6) zur Verfügung stehen, und daß das Mobilitätsdienst-Brokersystem (6) angepaßt ist, um die Informationen unabhängig von den Zugangsnetzen (4.1-4.3) bereitzustellen.

## Revendications

1. Procédé d'assistance de la mobilité d'au moins un terminal de télécommunications mobile (5.1 - 5.3) en liaison coopérante avec un réseau de télécommunications (2) ayant une pluralité de ressources de télécommunications (3.1 - 3.6) accessibles par l'intermédiaire d'une pluralité de réseaux d'accès (4.1 - 4.3) et de technologies d'accès associées (4.1a, b - 4.3a, b) en liaison coopérante avec le réseau de télécommunications (2), dans lequel le terminal de télécommunications mobile (5.1 - 5.3) reçoit des informations sur les réseaux d'accès (4.1 - 4.3) et les technologies d'accès (4.1a, b - 4.3a, b) disponibles au moins au niveau de son emplacement géographique actuel pour choisir un accès au réseau de télécommunications (2) par l'intermédiaire de l'un ou l'une de ses réseaux d'accès (4.1 - 4.3) et de ses technologies d'accès associées (4.1a, b - 4.3a, b) respectifs(ves) conformément aux spécifications d'au moins une ressource de télécommunications (3.1 - 3.6) requises par le terminal de télécommunications mobile (5.1 - 5.3), et dans lequel les informations sont fournies indépendamment des réseaux d'accès (4.1 - 4.3) au moyen d'un système de serveur de service de mobilité (6) en liaison coopérante avec une pluralité de réseaux d'accès (4.1 - 4.3)..

2. Procédé selon la revendication 1, **caractérisé en ce que** le système de serveur de service de mobilité (6) évalue la disponibilité des réseaux d'accès (4.1 - 4.3) capables de fournir la ressource requise (3.1 - 3.6) en envoyant des messages de requête dynamiques aux réseaux d'accès disponibles (4.1 - 4.3), de préférence lors de la réception d'une requête d'accès et/ou de service correspondante envoyée par le terminal de télécommunications mobile (5.1 - 5.3), et **en ce que** le système de serveur de service de mobilité (6) vérifie de manière active les paramètres de qualité appropriés au niveau de l'emplacement du terminal de télécommunications mobile (5.1-5.3).

3. Procédé selon la revendication 1, **caractérisé en ce que** les informations sont fournies conformément à des informations en temps différé comprises dans le système de serveur de service de mobilité (6).

4. Procédé selon la revendication 1, **caractérisé en ce que** les informations comprennent au moins un opérateur d'accès au réseau disponible (4.1 - 4.3), une technologie d'accès au réseau disponible (4.1a, b - 4.3a, b), une largeur de bande de communication disponible et une qualité de service disponible.

5. Procédé selon la revendication 1, comprenant en outre les étapes suivantes :
- le système de serveur de service de mobilité (6) effectue une prédiction de mouvement (M) du terminal de télécommunications mobile (5.1), et
- le système de serveur de service de mobilité (6) propose au moins un réseau d'accès approprié (4.1 - 4.3) au terminal de télécommunications mobile (5.1) conformément au mouvement prédit (M) du terminal de télécommunications mobile (5.1).

6. Procédé selon la revendication 1, **caractérisé en ce que** le système de serveur de service de mobilité (6) propose au moins un réseau d'accès (4.1 - 4.3) au terminal de télécommunications mobile (5.1 - 5.3) conformément à une prédiction de mouvement du terminal de télécommunications mobile (5.1 - 5.3), dans lequel la prédiction est obtenue au moyen d'une carte mondiale (gDM) comprise dans le système de serveur de service de mobilité (6), en particulier une carte routière numérique.

7. Procédé selon la revendication 1, **caractérisé en ce que** le système de serveur de service de mobilité (6) propose au moins un réseau d'accès (4.1 - 4.3) au terminal de télécommunications mobile (5.1 - 5.3) conformément à une prédiction de mouvement du terminal de télécommunications mobile (5.1 - 5.3), comprenant en outre les étapes suivantes :
- le système de serveur de service de mobilité (6) recueille des mesures de qualité du signal de communication envoyées par le terminal de télécommunications mobile (5.1 - 5.3) et/ou d'autres terminaux de télécommunications mobiles (5.1 - 5.3) en relation avec un mouvement actuel du terminal de télécommunications mobile (5.1 - 5.3), et
- des zones (SEI - SE3) sont catégorisées sur une carte mondiale (gDM) comprise dans le système de serveur de service de mobilité (6), en particulier une carte routière numérique, selon la qualité du signal mesurée.

8. Procédé selon la revendication 1, **caractérisé en ce qu'**un transfert du terminal de télécommunications mobile (5.1 - 5.3) entre les différents réseaux d'accès (4.1 - 4.3) est supporté en délivrant des informations relatives au terminal de télécommunications mobile (5.1 - 5.3) à un réseau d'accès (4.1 - 4.3) disponible à un emplacement futur du terminal de télécommunications mobile (5.1 - 5.3).

9. Procédé selon la revendication 1, **caractérisé en ce que** les informations sur la qualité du signal relatives à différents terminaux de télécommunications mobiles (5.1 - 5.3) sont échangées à l'intérieur du système de serveur de service de mobilité (6) pour générer une carte mondiale (gDM) appartenant au système de serveur de service de mobilité (6) en vue de prédire un mouvement (M) du terminal de télécommunications mobile (5.1 - 5.3) et de proposer au moins un réseau d'accès (4.1 - 4.3) au terminal de télécommunications mobile (5.1 - 5.3) conformément au mouvement prédit du terminal de télécommunications mobile (5.1 - 5.3).

10. Procédé selon la revendication 1, **caractérisé en ce que** les informations sur la qualité du signal relatives à différents terminaux de télécommunications mobiles (5.1 - 5.3) sont recueillies à partir de l'opérateur de réseau d'accès possédé et/ou de bases de données de tiers par le système de serveur de service de mobilité (6) pour prédire de manière dynamique le mouvement (M) du terminal de télécommunications mobile (5.1 - 5.3) et proposer au moins un réseau d'accès (4.1 - 4.3) au terminal de télécommunications mobile (5.1 - 5.3) conformément au mouvement prédit du terminal de télécommunications mobile (5.1 - 5.3).

11. Procédé selon la revendication 1, comprenant en outre l'étape de changement en faveur d'un réseau d'accès différent (4.1 - 4.3) et/ou une technologie d'accès différente (4.1a, b - 4.3a, b) pour l'accès du terminal de télécommunications mobile (5.1 - 5.3) au réseau de télécommunications (2) si le réseau d'accès (4.1 - 4.3) ou la technologie d'accès (4.1a, b - 4.3a, b) respectif(ve) offre une qualité de service requise par le terminal de télécommunications mobile (5.1 - 5.3) avec une consommation plus faible que celle d'un réseau d'accès actuel (4.1 - 4.3) ou une technologie d'accès actuelle (4,1a, b-4.3a, b) respectif(ve).

12. Procédé selon la revendication 1, comprenant en outre l'étape de changement en faveur d'un réseau d'accès différent (4.1 4.3) et/ou une technologie d'accès différente (4.1a, b - 4.3a, b) pour l'accès du terminal de télécommunications mobile (5.1 - 5.3) au réseau de télécommunications (2) si le réseau d'accès (4.1 - 4.3) ou la technologie d'accès (4.1a, b - 4.3a, b) respectif(ve) offre un service requis par le terminal de télécommunications mobile (5.1 - 5.3) avec un coût inférieur à celui du réseau d'accès actuel (4.1 - 4.3) ou de la technologie d'accès actuelle (4.1a, b - 4.3a, b) respectif(ve).

13. Procédé selon la revendication 1, comprenant en outre l'étape de changement en faveur d'un réseau d'accès (4.1 - 4.3) et/ou une technologie d'accès (4.1a, b - 4.3a, b) différent(e) pour l'accès du terminal de télécommunications mobile (5.1 - 5.3) au réseau de télécommunications (2) si le réseau d'accès actuel (4.1 - 4.3) ou la technologie d'accès actuelle (4.1a, b - 4.3a, b) respectif(ve) ne peut pas offrir un service ou une qualité de service requis(e) par le terminal de télécommunications mobile (5.1 - 5.3).

14. Système de télécommunications (1), permettant en particulier de réaliser le procédé selon l'une quelconque des revendications 1 à 13, comprenant :
- un réseau de télécommunications (2) ayant une pluralité de ressources de télécommunications (3.1 - 3.6) accessibles par l'intermédiaire d'une pluralité de réseaux d'accès (4,1 - 4.3) et de technologies d'accès associées (4.1a, b - 4.3a, b) en liaison coopérante avec le réseau de télécommunications (2), dans lequel les ressources de télécommunications (3.1 - 3.6) ont des spécifications diverses par rapport à au moins l'une des spécifications d'entrée, fonction réalisée, spécifications de sortie, informations à des fins de comptabilité, conditions de souscription et limitations de l'utilisation des ressources, en particulier les exigences de largeur de bande et de qualité de service,
- au moins un terminal de télécommunications mobile (5.1 - 5.3) accédant au réseau de télécommunications (2) par l'intermédiaire de l'un ou l'une de la pluralité de réseaux d'accès (4.1 - 4.3) et de technologies d'accès associées (4.1a, b - 4.3a, b) afin de demander un service fourni par au moins l'une des ressources de télécommunications (3.1 - 3.6), et
- un système de serveur de service de mobilité (6) en liaison coopérante avec une pluralité de réseaux d'accès (4.1 - 4.3), comprenant une base de données incluant des informations sur les spécifications des ressources de télécommunications (3.1 - 3.6) et un bloc d'adaptation (6.2) permettant d'adapter les ressources de télécommunications (3.1 - 3.6) afin de satisfaire à une requête de service effectuée par le terminal de télécommunications mobile (5.1 - 5.3),
**caractérisé en ce que** le système de serveur de service de mobilité (6) est adapté pour fournir au terminal de télécommunications mobile (5.1 - 5.3) des informations sur les réseaux d'accès (4.1 - 4.3) et les technologies d'accès (4.1a, b - 4.3a, b) disponibles au moins à un emplacement géographique actuel de ce dernier pour choisir un accès au réseau de télécommunications (2) par l'intermédiaire de l'un ou l'une des réseaux d'accès (4.1 - 4.3) et technologies d'accès associées (4.1a, b - 4.3a, b) respectifs(ves) conformément aux spécifications des ressources de télécommunications requises (3.1 - 3.6), et **en ce que** le système de serveur de service de mobilité (6) est adapté pour fournir les informations indépendamment des réseaux d'accès (4.1 - 4.3).

15. Système de serveur de service de mobilité (6) pour une utilisation dans un système de télécommunications (1) selon le préambule de la revendication 14, **caractérisé en ce que** le système de serveur de service de mobilité (6) est adapté pour fournir au terminal de télécommunications mobile (5.1 - 5.3) des informations sur les réseaux d'accès (4.1 - 4.3) et les technologies d'accès (4.1a, b - 4.3a, b) disponibles au moins au niveau d'un emplacement géographique actuel de ce dernier pour choisir un accès au réseau de télécommunications (2) par l'intermédiaire de l'un ou l'une des réseaux d'accès (4.1 - 4.3) et technologies d'accès associées (4.1a, b - 4.3a, b) respectifs(ves) conformément aux spécifications des ressources de télécommunications requises (3.1 - 3.6), et **en ce que** le système de serveur de service de mobilité (6) est adapté pour fournir les informations indépendamment des réseaux d'accès (4.1 - 4.3).
